# EUROPEAN PATENT SPECIFICATION

(11) **EP 4 618 014 B1**
(45) Date of publication and mention of the grant of the patent: **28.10.2026**
(21) Application number: 23912179.1
(22) Date of filing: 26.12.2023
(51) Int. Cl.: G06T 7/11, G06V 10/82, G06V 20/69

(54) **IMAGE ANALYSIS SYSTEM, IMAGE ANALYSIS METHOD, AND IMAGE ANALYSIS PROGRAM**
BILDANALYSESYSTEM, BILDANALYSEVERFAHREN UND BILDANALYSEPROGRAMM
SYSTÈME, PROCÉDÉ ET PROGRAMME D'ANALYSE D'IMAGE

(30) Priority: 27.12.2022 JP 2022210268
(43) Date of publication of application: 17.09.2025
(73) Proprietor: Resonac Corporation, Tokyo 105-7325 (JP)
(72) Inventor: IKADAI Hiroto, Tokyo 105-7325 (JP); UEDA Kazuki, Tokyo 105-7325 (JP); TOMISAKA Katsuhiko, Tokyo 105-7325 (JP); SEKI Hideyuki, Tokyo 105-7325 (JP); MATSUZAWA Mitsuharu, Tokyo 105-7325 (JP)
(74) Representative: Strehl & Partner mbB
(86) International application number: PCT/JP2023/046750
(87) International publication number: WO 2024/143401

(56) References cited:
- CN-A- 114 897 816
- JP-A- 2020 201 243
- JP-A- 2022 050 347
- US-A1- 2022 082 508
- RYAN COHN ET AL: "Instance Segmentation for Direct Measurements of Satellites in Metal Powders and Automated Microstructural Characterization from Image Data", ARXIV.ORG, CORNELL UNIVERSITY LIBRARY, 201 OLIN LIBRARY CORNELL UNIVERSITY ITHACA, NY 14853, 5 January 2021 (2021-01-05), XP081852255

## Description

### Technical Field

An aspect of the present disclosure relates to an image analysis system, an image analysis method, and an image analysis program.

### Background Art

Patent Literature 1 describes a conductive particle shape evaluation device that evaluates a shape of a surface of a conductive particle having a plurality of conductive protruding portions on the surface thereof. RYAN COHN ET AL ("Instance Segmentation for Direct Measurements of Satellites in Metal Powders and Automated Microstructural Characterization from Image Data", ARXIV.ORG, CORNELL UNIVERSITY LIBRARY, 201 OLIN LIBRARY CORNELL UNIVERSITY ITHACA, NY 14853, 5 January 2021, XP081852255) relates to applying the Mask R-CNN instance segmentation model to to images of metal powder particles produced through gas atomization. Using a method for measuring the particle size distribution, the authors demonstrate the first direct measurements of the satellite content in powder samples. The trained model is used to generate measurements for a much larger set of unlabelled images.

### Citation List

### Patent Literature

Patent Literature 1: Japanese Unexamined Patent Publication No. 2016-061722

### Summary of Invention

### Technical Problem

There is a demand for a mechanism for accurately identifying an object in an image.

### Solution to Problem

An image analysis system according to an aspect of the present disclosure comprises at least one processor. The at least one processor is configured to: acquire a target image showing one or more objects each of which has a base material and a coating region on the base material; input the target image to an instance segmentation model executing instance segmentation to set at least one instance mask distinguishing each of at least one of the one or more objects from each other; input the target image to a semantic segmentation model executing semantic segmentation to set a semantic mask indicating a contour and a coating region of an object set consisting of the at least one object; and identify, for each of the at least one object, the contour and the coating region of the object based on the at least one instance mask and the semantic mask.

An image analysis method according to an aspect of the present disclosure is executed by an image analysis system including at least one processor. The image analysis method includes: acquiring a target image showing one or more objects each of which has a base material and a coating region on the base material; inputting the target image to an instance segmentation model executing instance segmentation to set at least one instance mask distinguishing each of at least one of the one or more objects from each other; inputting the target image to a semantic segmentation model executing semantic segmentation to set a semantic mask indicating a contour and a coating region of an object set consisting of the at least one object; and identifying, for each of the at least one object, the contour and the coating region of the object based on the at least one instance mask and the semantic mask.

An image analysis program according to an aspect of the present disclosure causes a computer to execute: acquiring a target image showing one or more objects each of which has a base material and a coating region on the base material; inputting the target image to an instance segmentation model executing instance segmentation to set at least one instance mask distinguishing each of at least one of the one or more objects from each other; inputting the target image to a semantic segmentation model executing semantic segmentation to set a semantic mask indicating a contour and a coating region of an object set consisting of the at least one object; and identifying, for each of the at least one object, the contour and the coating region of the object based on the at least one instance mask and the semantic mask.

In these aspects, two types of image segmentation of instance segmentation and semantic segmentation are executed to set two types of masks for each object. Then, the contour and the coating region are identified for each object based on the two types of masks. The application of the two types of image segmentation to one target image makes it possible to accurately identify the object in the image.

### Advantageous Effects of Invention

According to an aspect of the present disclosure, it is possible to accurately identify an object in an image.

### Brief Description of Drawings

FIG. 1 is a diagram showing a functional configuration of an evaluation system.
FIG. 2 is a flowchart showing an example of generation of a trained model.
FIG. 3 is a flowchart showing an example of image analysis and evaluation.
FIG. 4 is a flowchart showing details of a process of identifying an object from a target image.
FIG. 5 is a diagram showing an example of instance segmentation.
FIG. 6 is a diagram showing an example of semantic segmentation.
FIG. 7 is a diagram showing an example of expansion of a temporary instance mask.
FIG. 8 is a diagram showing an example of mask replacement.
FIG. 9 is a diagram showing a method for calculating an evaluation value.

### Description of Embodiments

Hereinafter, embodiments of the present disclosure will be described in detail with reference to the accompanying drawings. In the description of the drawings, the same or equivalent elements are denoted by the same reference numerals, and a redundant description thereof will be omitted.

### [Outline of System]

An image analysis system according to the present disclosure is a computer system that identifies an object appearing in an image. In one example, the image analysis system identifies a contour and a coating region of the object appearing in the image.

The object refers to a solid identified by the image analysis system. The object has a base material and the coating region. The base material refers to a component that occupies a main region of the object. The coating region refers to a component located on the base material. The object has any shape, dimensions, and components. For example, the object may have a spherical, planar, or columnar shape or may have a more complex shape. The object may have a size that can be visually recognized or may be so small that it can only be seen with a microscope. The shape and dimensions of the base material may influence the shape and dimensions of the object. The coating region is a component that covers at least a portion of a surface of the base material. The coating region may be formed by adhering powdery or granular particles on the base material or may be formed by applying a liquid coating agent or a coating agent containing metal onto the base material. A plurality of coating regions separated from each other may be provided on one base material. The coating region may be formed by one or more coating elements disposed on the base material. Individual particles are given as examples of the coating element. The particle disposed on the base material as the coating element may be understood as a protrusion. The coating region may be understood as a convex portion that protrudes from the surface of the base material or as a set of closely spaced protrusions. At least some of the components may be different between the base material and the coating region or all of the components may be common to the base material and the coating region. Both the base material and the coating region may be an organic compound or an inorganic compound or may include both the organic compound and the inorganic compound.

The object may be a particulate material. In one example, the particulate material comprises a core particle and a plurality of fine particles disposed on a surface of the core particle. A diameter of the fine particle is smaller than a diameter of the core particle. The core particle is an example of the base material, the individual fine particles are examples of the coating element, and a set of the plurality of fine particles is an example of the coating region.

The image analysis system identifies the object using a trained model generated by machine learning. The machine learning refers to a method that iteratively performs learning based on given information to autonomously find a law or a rule. The trained model used in the image analysis system is a computational model used to identify the object in the image, that is, a computational model for image segmentation. In one example, the image analysis system executes two types of image segmentation of instance segmentation and semantic segmentation on one target image and identifies the object based on the execution results of the image segmentation.

The instance segmentation refers to a method that identifies one or more objects appearing in the image while distinguishing each object, that is, each instance. Examples of the instance segmentation include Mask R-CNN, R-RCN, and YOLACT. The instance segmentation detects the individual objects of the same type while distinguishing the objects from each other. In general, in the instance segmentation, the accuracy of the shape of a mask indicating a region of the object in the image is lower than that in the semantic segmentation.

The semantic segmentation refers to a method that identifies one or more objects appearing in the image without distinguishing differences between the instances. Examples of the semantic segmentation include U-Net, FCN, and SegNet. The semantic segmentation is not capable of distinguishing two or more objects of the same type and can only give one meaning to a mask indicating a set of the two or more objects. In general, in the semantic segmentation, the accuracy of the shape of the mask is higher than that in the instance segmentation.

As described above, each of the instance segmentation and the semantic segmentation has advantages and disadvantages. The image analysis system aims to automatically and accurately identify the individual objects in the image using the advantages of these two types of image segmentation.

In one example, the image analysis system may be implemented as at least part of an evaluation system which is a computer system performing evaluation on covering of the object appearing in the image. The covering refers to a state in which at least a portion of the base material is hidden by the coating region in the appearance of the object. The evaluation system identifies the contour and the coating region of the object appearing in the image and performs evaluation on the coating region. The evaluation on the coating region refers to a process of quantitatively determining the coating region covering the base material. For example, the evaluation system may perform evaluation on the covering of the base material by the coating region or may perform evaluation on the coating region as such. In one example, the evaluation system calculates an evaluation value, which is a quantitative index related to the coating region, and outputs the evaluation value. The evaluation value may be a value related to the covering of the base material by the coating region or may be a physical quantity of the coating region. The evaluation system may automatically and accurately identify the coating region and accurately perform evaluation on the covering of the object.

### [Configuration of System]

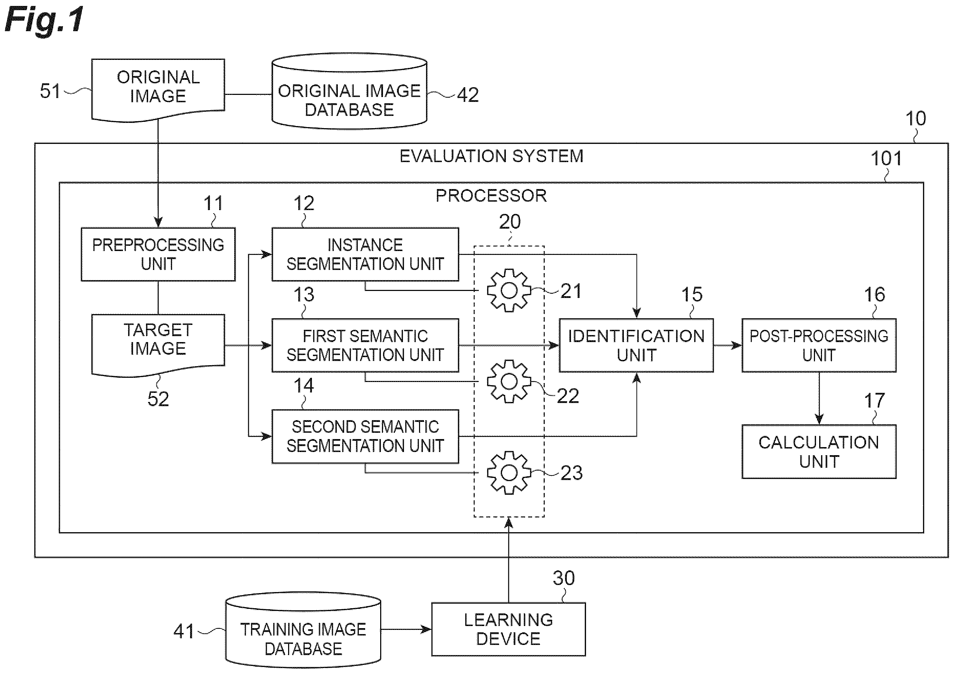

FIG. 1 is a diagram showing an example of a functional configuration of an evaluation system 10 to which the image analysis system according to the present disclosure is applied. The evaluation system 10 comprises a processor 101 as a hardware component. The processor 101 is, for example, a central processing unit (CPU), a digital signal processor (DSP), or a graphics processing unit (GPU). The evaluation system 10 further comprises, as hardware components, a main storage device configured by a RAM and a ROM, an auxiliary storage device configured by a flash memory, a hard disk, and the like, input devices such as a keyboard and a mouse, output devices such as a monitor and a speaker, and a communication module that executes data communication with an external device. The processor 101 executes a program stored in the auxiliary storage device to implement each functional module of the evaluation system 10.

An evaluation program for causing a computer to function as the evaluation system 10 includes program codes for implementing each functional module of the evaluation system 10. The evaluation program includes an image analysis program according to the present disclosure. The evaluation program may be recorded on a non-transitory recording medium, such as a CD-ROM, a DVD-ROM, or a semiconductor memory, and then provided. Alternatively, the evaluation program may be provided as data signals superimposed on carrier waves via a communication network. The provided evaluation program is stored in, for example, the auxiliary storage device.

The evaluation system 10 may be configured by one computer or may be configured by a set of a plurality of computers, that is, a distributed system. Examples of the computer used for the evaluation system 10 include various types of computers such as a personal computer, a workstation, a tablet terminal, and a smartphone. In a case where a plurality of computers is used for the evaluation system 10, these computers are connected via the communication network such as the Internet or an intranet, to logically construct one evaluation system 10. The evaluation system 10 may be implemented as a client-server system such as a cloud system, or may be implemented by a standalone computer.

In one example, the evaluation system 10 cooperates with at least one external storage via the communication network. The external storage is a device or a recording medium that stores various types of data used for processes in the evaluation system 10. The external storage may be a component of the evaluation system 10 or may be provided outside the evaluation system 10. The communication network may be constructed by the Internet, an intranet, or a combination thereof. The communication network may be constructed by a wired network, a wireless network, or a combination thereof.

FIG. 1 shows a training image database 41 and an original image database 42 as examples of the external storage. The training image database 41 is a storage that stores at least one training image used for machine learning. The original image database 42 is a storage that stores at least one original image 51 showing at least one object. The training image database 41 and the original image database 42 may be integrated into one database.

In one example, the evaluation system 10 cooperates with a learning device 30 via the communication network. The learning device 30 is a computer or a computer system that generates a trained model 20. The learning device 30 may be a component of the evaluation system 10 or may be provided outside the evaluation system 10. Since the trained model 20 is portable between computer systems, the evaluation system 10 may also use the trained model 20 provided from other computers or computer systems. The generation of the trained model 20 by the learning device 30 corresponds to a learning phase.

In one example, the processor 101 functions as a preprocessing unit 11, an instance segmentation unit 12, a first semantic segmentation unit 13, a second semantic segmentation unit 14, an identification unit 15, a post-processing unit 16, and a calculation unit 17. These functional modules correspond to an operation phase using the generated trained model 20.

The preprocessing unit 11 is a functional module that executes preprocessing on the original image 51 to generate a target image 52 showing one or more objects.

The instance segmentation unit 12 is a functional module that executes instance segmentation on the target image 52 to set at least one instance mask corresponding to at least one object in the target image 52. The instance segmentation unit 12 sets the instance mask using an instance segmentation model 21 which is an example of the trained model 20. The instance mask is a mask that is set for each object by the instance segmentation such that the individual objects are distinguished from each other.

The first semantic segmentation unit 13 is a functional module that executes semantic segmentation on the contour of a set of objects in the target image 52 to set a semantic mask indicating the contour. Hereinafter, this semantic mask is also referred to as a first semantic mask. The first semantic mask is set for an object set consisting of at least one object in the target image 52. The first semantic segmentation unit 13 sets the first semantic mask using a first semantic segmentation model 22 which is the trained model 20 executing semantic segmentation on the contour of the object set.

The second semantic segmentation unit 14 is a functional module that executes semantic segmentation on the coating region of the object set in the target image 52 to set a semantic mask indicating the coating region. Hereinafter, this semantic mask is also referred to as a second semantic mask. The second semantic mask is set for a coating set including at least one coating region corresponding to the object set. The second semantic segmentation unit 14 sets the second semantic mask using a second semantic segmentation model 23 which is the trained model 20 executing semantic segmentation on the coating region of the object set.

The identification unit 15 is a functional module that identifies the contour and the coating region of the object in the target image 52 based on at least one instance mask, the first semantic mask, and the second semantic mask.

The post-processing unit 16 is a functional module that executes post-processing on the target image 52 in which the object has been identified.

The calculation unit 17 is a functional module that calculates an evaluation value related to the covering of each identified object.

### [Operation of System]

Hereinafter, an example of the process related to the evaluation system 10 will be described, and examples of an image analysis method and an evaluation method according to the present disclosure will be described. In the following examples, the object is a particulate material, and the coating elements are the individual fine particles on a core particle.

### (Generation of Trained Model)

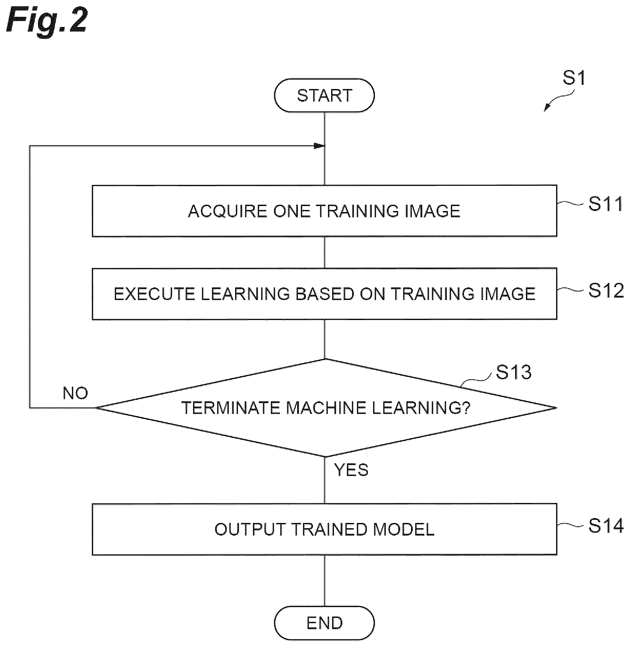

The generation of the trained model 20 will be described with reference to FIG. 2. FIG. 2 is a flowchart showing an example of the generation process as a processing flow S1. The processing flow S1 corresponds to the learning phase. The processing flow S1 is executed for each of the instance segmentation model 21, the first semantic segmentation model 22, and the second semantic segmentation model 23 and thus is a process common to the three types of trained models.

In step S11, the learning device 30 acquires one training image from the training image database 41. The training image is an image associated with a label which is information treated as ground truth in machine learning. In one example, a training image is generated by a label being set for a provided sample image by a user operation. The label of the training image for generating the instance segmentation model 21 is an instance mask set for each object. The label of the training image for generating the first semantic segmentation model 22 is the first semantic mask set for the object set. The label of the training image for generating the second semantic segmentation model 23 is the second semantic mask set for the coating set. In one example, the second semantic mask as a label is set for a coating region or a coating element having an area or height equal to or greater than a predetermined threshold value. The threshold value for the area and the threshold value for the height may be appropriately set according to the type of the object or the like.

In step S12, the learning device 30 executes the learning based on the training image. In one example, the learning device 30 inputs the training image to a machine learning model including a neural network and obtains an estimation result output from the machine learning model. The learning device 30 updates parameters in the machine learning model using a method such as back propagation based on an error between the estimation result and the label of the training image. For example, the learning device 30 updates a weight of the neural network. In one example, the learning device 30 executes the learning using Mask R-CNN to generate the instance segmentation model 21 and executes the learning using U-Net to generate the first and second semantic segmentation models 22 and 23.

In step S13, the learning device 30 determines whether to terminate the machine learning. In a case where the learning device 30 determines that a predetermined termination condition is not met (NO in step S13), the process returns to step S11. In a repetition process, the learning device 30 acquires a next training image in step S11 and executes the learning based on that training image in step S12. On the other hand, in a case where the learning device 30 determines that the termination condition is met (YES in step S13), the process proceeds to step S14. The termination condition may be set based on the error or may be set based on the number of training images to be processed, that is, the number of learning operations. Alternatively, the learning device 30 may evaluate the performance of the machine learning model using given verification data and terminate the machine learning in a case where the evaluation meets a given criterion.

In step S14, the learning device 30 outputs the machine learning model for which the machine learning has been completed as the trained model 20 (the instance segmentation model 21, the first semantic segmentation model 22, or the second semantic segmentation model 23). In one example, the learning device 30 stores the trained model 20 in the auxiliary storage device of the evaluation system 10.

As described above, the processing flow S1 is executed for each of the instance segmentation model 21, the first semantic segmentation model 22, and the second semantic segmentation model 23. These three types of trained models 20 are used by the evaluation system 10.

### (Analysis of Target Image and Evaluation of Object)

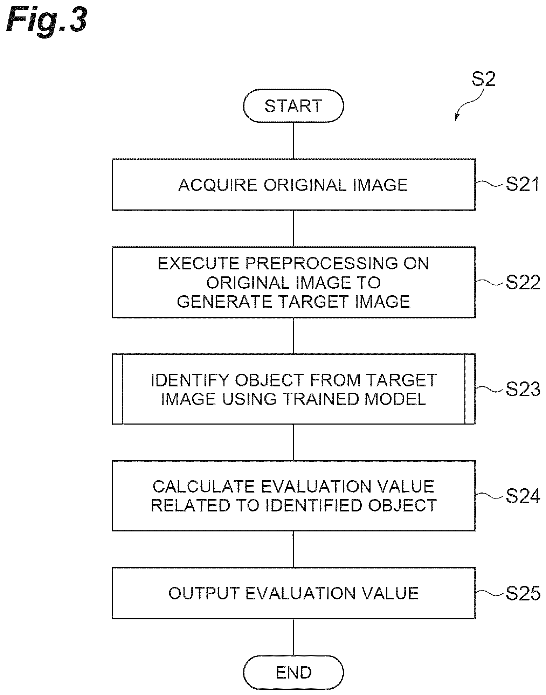

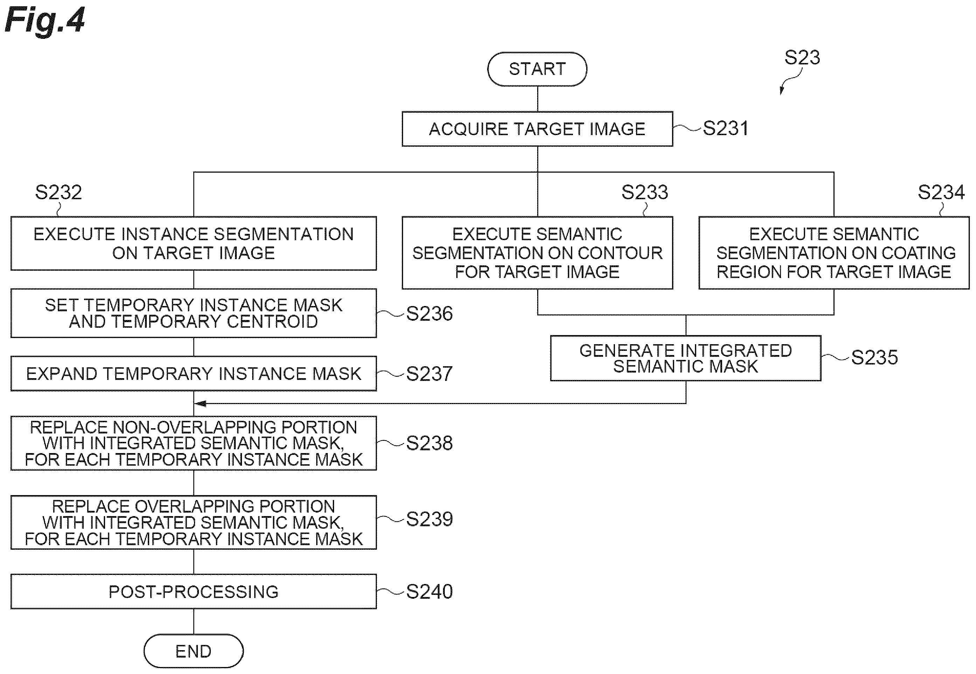

A process of analyzing the target image to evaluate the object will be described with reference to FIGS. 3 and 4. FIG. 3 is a flowchart showing an example of that process as a processing flow S2. FIG. 4 is a flowchart showing details of a process of identifying the object from the target image.

In step S21, the preprocessing unit 11 acquires the original image 51 from the original image database 42. In one example, the original image 51 showing the particulate material is a scanning electron microscope (SEM) image obtained by imaging a plurality of particulate materials collected on a carbon tape with an SEM.

In step S22, the preprocessing unit 11 performs preprocessing on the original image 51 to generate the target image 52. In a case where auxiliary information, such as a character string and a scale, is written in the original image 51, the preprocessing unit 11 may remove the auxiliary information using image processing such as trimming, to generate the target image 52 that does not include the auxiliary information. The preprocessing unit 11 may perform histogram flattening on the original image 51 to generate the target image 52 having a high contrast, that is, the target image 52 in which the object appears more clearly. As described above, the preprocessing may include at least one of the deletion of the auxiliary information and the histogram flattening.

In step S23, the instance segmentation unit 12, the first semantic segmentation unit 13, the second semantic segmentation unit 14, and the identification unit 15 identify the object from the target image 52 in cooperation with each other. This process will be described in detail with reference to FIG. 4.

In step S231, each of the instance segmentation unit 12, the first semantic segmentation unit 13, and the second semantic segmentation unit 14 acquires the target image 52 from the preprocessing unit 11.

In step S232, the instance segmentation unit 12 executes the instance segmentation on the target image 52. The instance segmentation unit 12 inputs the target image 52 to the instance segmentation model 21 and acquires the instance mask estimated by the trained model. As a result, the instance segmentation unit 12 sets at least one instance mask corresponding to at least one of one or more objects appearing in the target image 52.

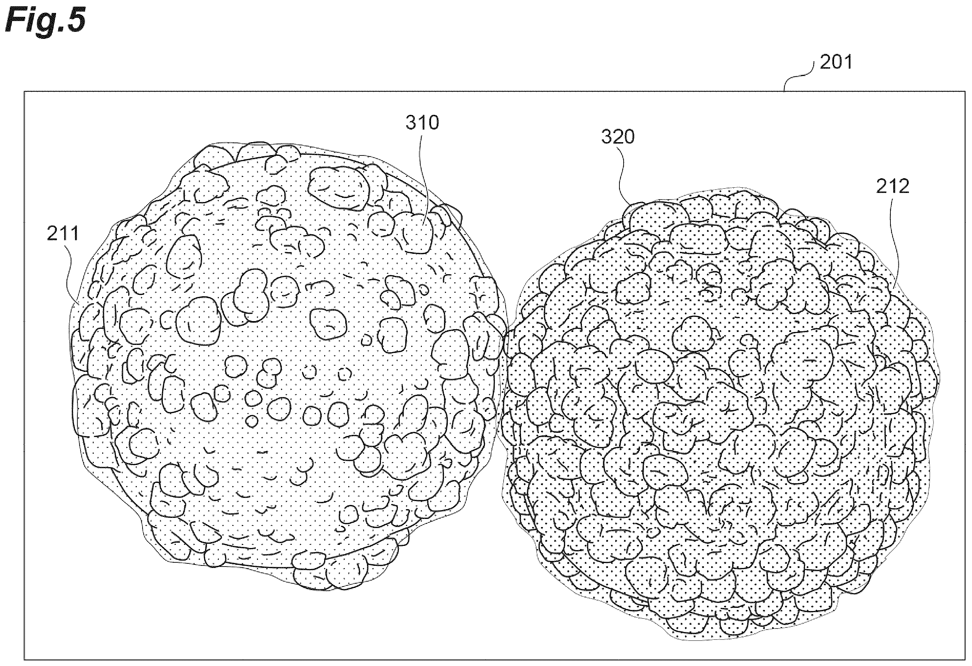

FIG. 5 is a diagram showing an example of the instance segmentation. FIG. 5 shows a part of the target image 52 processed by the instance segmentation unit 12 as a partial image 201. The partial image 201 shows objects 310 and 320 adjacent to each other. In this example, an instance mask 211 is set for the object 310, and an instance mask 212 is set for the object 320. As described above, the accuracy of the shape of the instance mask is relatively low. In this example, the outer edges of the instance masks 211 and 212 are not completely matched with the contours of the objects 310 and 320. For example, the instance mask 211 covers a region outside the contour of the object 310, but does not cover a small portion of the object 310. The same applies to the relationship between the instance mask 212 and the object 320.

Returning to FIG. 4, in step S233, the first semantic segmentation unit 13 executes the semantic segmentation on the contour for the target image 52. The first semantic segmentation unit 13 inputs the target image 52 to the first semantic segmentation model 22 and acquires the first semantic mask estimated by the trained model. As a result, the first semantic segmentation unit 13 sets the first semantic mask indicating the contour of the object set consisting of at least one object appearing in the target image 52.

In step S234, the second semantic segmentation unit 14 executes the semantic segmentation on the coating region for the target image 52. The second semantic segmentation unit 14 inputs the target image 52 to the second semantic segmentation model 23 and acquires the second semantic mask estimated by the trained model. As a result, the second semantic segmentation unit 14 sets the second semantic mask indicating the coating set.

In step S235, the identification unit 15 combines the first semantic mask and the second semantic mask to generate an integrated semantic mask indicating both the contour and the coating region of the object set.

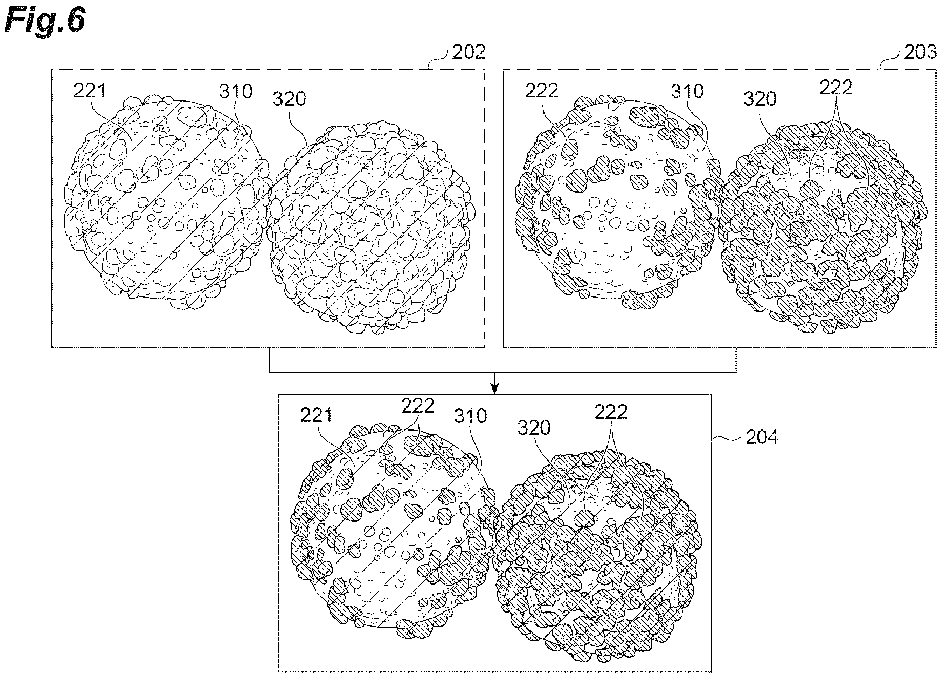

FIG. 6 is a diagram showing an example of the semantic segmentation. FIG. 6 shows a part of the target image 52 processed by the first semantic segmentation unit 13 as a partial image 202 and shows a part of the target image 52 processed by the second semantic segmentation unit 14 as a partial image 203. Each of the partial images 202 and 203 corresponds to the partial image 201 shown in FIG. 5.

In this example, a first semantic mask 221 is set for a set of objects 310 and 320 and a second semantic mask 222 is set for a set of coating regions on the objects 310 and 320. In this example, the second semantic mask 222 is set for a coating region or a coating element having an area or height equal to or greater than a predetermined threshold value. This result of the second semantic mask 222 is due to the label set in the training image. Since the semantic mask does not distinguish between two or more objects of the same type, the first semantic mask 221 does not distinguish between the object 310 and the object 320, and the second semantic mask 222 does not distinguish between the individual coating regions. As described above, the accuracy of the shape of the semantic mask is relatively high. In this example, the outer edge of the first semantic mask 221 is approximately matched with the contours of the objects 310 and 320, and the outer edge of the second semantic mask 222 is approximately matched with the contours of the individual coating regions. A partial image 204 is obtained by combining the partial images 202 and 203. The partial image 204 shows an integrated semantic mask of both the first semantic mask 221 and the second semantic mask 222.

Returning to FIG. 4, in step S236, the identification unit 15 sets a temporary instance mask and a temporary centroid based on each instance mask obtained by the instance segmentation unit 12. In one example, the identification unit 15 sets each instance mask itself as the temporary instance mask and sets the centroid of each instance mask itself as the temporary centroid.

In step S237, the identification unit 15 expands each temporary instance mask. This expansion is a process of moving the outer edge of the temporary instance mask outward in a radial direction by n pixels to increase the area of the temporary instance mask. This process is intended to set each temporary instance mask so as to cover the entire object. The value n may be set according to the general shape or dimensions of the object.

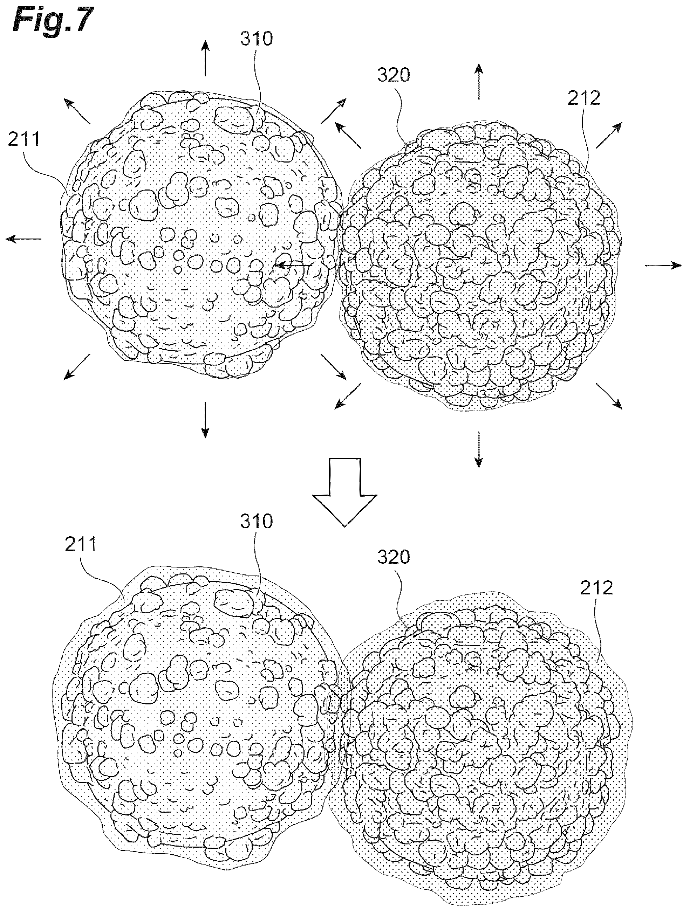

FIG. 7 is a diagram showing an example of the expansion of the temporary instance mask. In this example, the identification unit 15 expands each of the temporary instance masks 211 and 212. Through this process, the expanded temporary instance mask 211 covers the entire object 310, and the expanded instance mask 212 covers the entire object 320.

Returning to FIG. 4, in step S238, the identification unit 15 replaces a non-overlapping portion of each of the expanded temporary instance masks with an integrated semantic mask. The non-overlapping portion of the temporary instance mask refers to a portion that does not overlap other temporary instance masks. The identification unit 15 replaces the non-overlapping portion with a portion of the integrated semantic mask corresponding to the non-overlapping portion and finally identifies the contour and the coating region of the object in the non-overlapping portion. In one example, the identification unit 15 associates an object ID, which is an identifier for uniquely identifying each object, with each non-overlapping portion and associates each replaced mask with each object.

In step S239, the identification unit 15 replaces an overlapping portion of each expanded temporary instance mask with the integrated semantic mask. In a case where there is no overlapping portion, step S239 is omitted. The overlapping portion of the temporary instance mask refers to a portion that overlaps another temporary instance mask. In one example, the identification unit 15 assigns each pixel of the overlapping portion to a single temporary instance mask based on a distance between each pixel of the overlapping portion and each temporary centroid. For example, the identification unit 15 determines, for each pixel of the overlapping portion, the temporary centroid having the shortest distance from the pixel and assigns the pixel to the temporary instance mask having that temporary centroid. By this process, the identification unit 15 divides the overlapping portion into individual portions corresponding to the individual temporary instance masks. The identification unit 15 finally determines the contour of each object by the division. Further, the identification unit 15 identifies the coating region of each of one or more objects located in the overlapping portion with reference to the integrated semantic mask corresponding to the overlapping portion.

In steps S238 and S239, for each of at least one object in the target image 52, the identification unit 15 identifies the contour and the coating region of the object based on at least one instance mask and the integrated semantic mask. In one example, for each of the at least one instance mask, the identification unit 15 replaces the instance mask with a corresponding portion of the semantic mask and identifies the contour and the coating region of the object corresponding to the instance mask. In a case where there is an overlapping portion between the first object and the second object, the identification unit 15 divides the overlapping portion into a first portion corresponding to the first temporary instance mask and a second portion corresponding to the second temporary instance mask. Then, the identification unit 15 replaces a non-overlapping portion and the first portion of the first temporary instance mask with a corresponding portion of the integrated semantic mask and identifies the contour and the coating region of the first object. In addition, the identification unit 15 replaces a non-overlapping portion and the second portion of the second instance mask with a corresponding portion of the integrated semantic mask and identifies the contour and the coating region of the second object. In one example, the identification unit 15 generates instance information indicating a correspondence among the object ID, the contour, and the coating region, for each identified object.

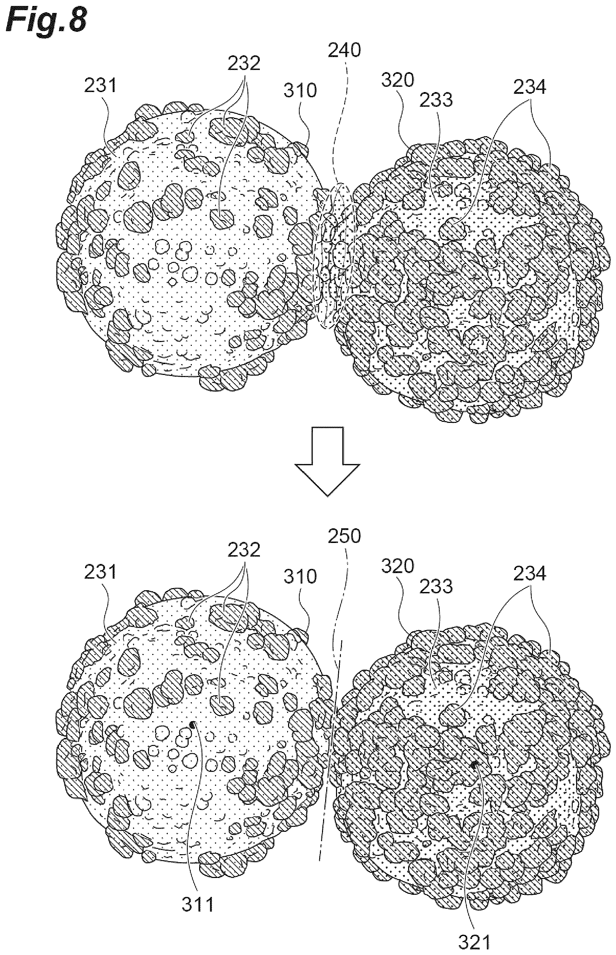

FIG. 8 is a diagram showing an example of mask replacement and corresponds to FIG. 7. As shown in FIG. 7, the temporary instance masks of the objects 310 and 320 overlap each other within a range 240. Therefore, there is an overlapping portion between the two objects.

In this example, the identification unit 15 replaces a non-overlapping portion of the temporary instance mask 211 with the integrated semantic mask to set a mask 231 indicating the contour of the object 310 and a mask 232 indicating the coating region of the object 310. Furthermore, the identification unit 15 replaces a non-overlapping portion of the temporary instance mask 212 with the integrated semantic mask to set a mask 233 indicating the contour of the object 320 and a mask 234 indicating the coating region of the object 320. The masks 231 and 233 correspond to the first semantic mask 221, and the masks 232 and 234 correspond to the second semantic mask 222.

The identification unit 15 further replaces the overlapping portion located in the range 240 with the integrated semantic mask. For each pixel of the overlapping portion, the identification unit 15 calculates a distance from a temporary centroid 311 of the object 310 and a distance from a temporary centroid 321 of the object 320 and associates the pixel with the temporary instance mask having the temporary centroid closest to the pixel. As a result, a boundary line 250 is set as a portion of the contours of the object 310 and the object 320. The identification unit 15 replaces a portion corresponding to the object 310 with the integrated semantic mask and finally determines the mask 231 indicating the contour of the object 310 and the mask 232 indicating the coating region of the object 310. Furthermore, the identification unit 15 replaces a portion associated with the object 320 with the integrated semantic mask and finally determines the mask 233 indicating the contour of the object 320 and the mask 234 indicating the coating region of the object 320. The determined masks 231 and 232 may be said to be the final instance mask indicating the object 310, and the determined masks 233 and 234 may be said to be the final instance mask indicating the object 320.

Returning to FIG. 4, in step S240, the post-processing unit 16 executes post-processing on the target image 52 in which the object has been identified. For example, the post-processing unit 16 may delete or invalidate the instance information of the object that is located at an end of the target image 52 and does not appear as a whole.

Returning to FIG. 3, in step S24, the calculation unit 17 calculates an evaluation value related to the identified object. The evaluation value related to the object may be an evaluation value related to the entire object including the base material and the coating layer, may be an evaluation value related to the coating layer, or may be an evaluation value related to the coating element. For example, the calculation unit 17 may calculate the dimensions of the object. Alternatively, the calculation unit 17 may calculate an evaluation value related to the covering of the base material by the coating region, for example, calculate a coverage indicating a ratio at which the base material is covered by the coating region. Alternatively, the calculation unit 17 may calculate, for each of at least one coating element, physical parameters such as an area, height, and a radius, as evaluation values. The height of the coating element refers to a distance from the surface of the base material to the top of the coating element. Alternatively, the calculation unit 17 may calculate an evaluation value related to a shape, such as roundness, for each of at least one coating element. The calculation unit 17 may calculate, as the evaluation values, a statistical value related to a plurality of coating elements, such as a standard deviation, an average value, and a median value. For example, the calculation unit 17 can calculate statistical values for various physical parameters such as an area, roundness, height, and a radius. In a case where the coating element is a particle, the calculation unit 17 may calculate a CV value which is a coefficient of variation of a particle diameter as the evaluation value. The CV value is obtained by the following formula. The CV value is also an example of the statistical value.
$CV value = \left(standard deviation\right) / \left(median diameter\right)$

The calculation unit 17 may calculate the evaluation value only for an object which meets a predetermined requirement, of one or more identified objects. For example, the calculation unit 17 may calculate the evaluation value only for the object in which the proportion of the length of a contour corresponding to the overlapping portion to the entire length of the contour of the object is equal to or less than a predetermined threshold value. The threshold value may be, for example, 30%. In the example illustrated in FIG. 8, the "contour corresponding to the overlapping portion" is a contour located on the boundary line 250. In a case where the proportion of the length of the contour corresponding to the overlapping portion is relatively large, the identified contour is likely to deviate from the actual contour of the object. An object having this possibility is excluded from the calculation of the evaluation value, which makes it possible to obtain a more accurate evaluation value.

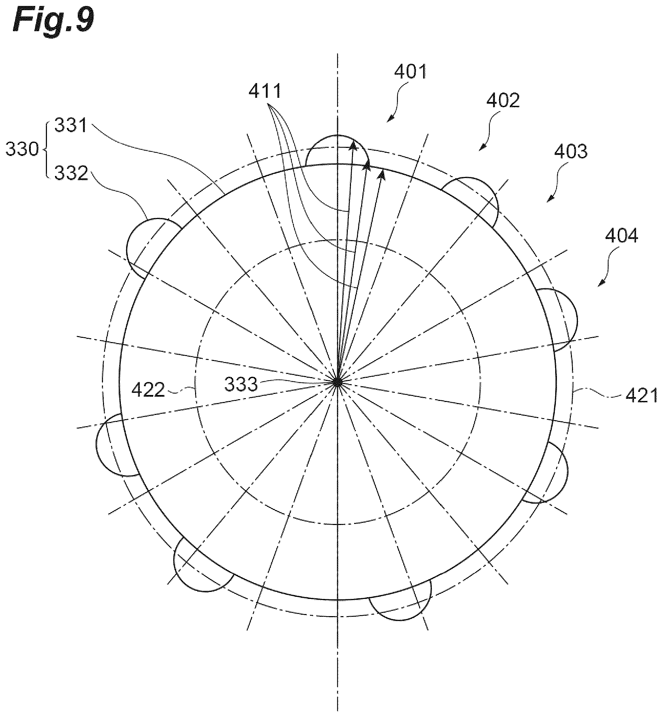

Various examples related to a method for calculating the evaluation value will be described with reference to FIG. 9. FIG. 9 is a diagram showing the calculation method. The object shown in this example is a particulate material 330 having a base material 331 and fine particles 332 as the coating elements.

In one example, the calculation unit 17 calculates the diameter of the particulate material 330, that is, a particle diameter. The calculation unit 17 virtually divides the particulate material 330 into n equal parts along a circumferential direction around a temporary centroid 333 to set n fan-shaped sections. Then, the calculation unit 17 calculates the radius of the particulate material 330 in each of the fan-shaped sections. The calculation unit 17 calculates the radius in an i-th fan-shaped section as follows. That is, the calculation unit 17 sets sample points on the contour of the particulate material 330 in the i-th fan-shaped section and an (i+1)-th fan-shaped section for each angle θ. Then, the calculation unit 17 calculates the distance of each sample point from the temporary centroid 333. Then, the calculation unit 17 sorts a plurality of calculated distances in descending order to acquire the top p distances and obtains an average value of the p distances as the radius. In order to calculate the radius in a certain fan-shaped section, the sample point in the next fan-shaped section is used, which makes it possible to suppress an error in the radius that may occur due to the presence of the fine particle 332 or the presence of the distorted fine particle 332 on the boundary between the fan-shaped sections. The calculation unit 17 calculates the average value of the radii in the n fan-shaped sections and obtains a value that is twice the average value as the particle diameter.

The calculation unit 17 may exclude the fan-shaped section that corresponds to the contour corresponding to the overlapping portion, calculate the radius in each of the remaining fan-shaped sections, and obtain a value that is twice the average value of a plurality of calculated radii as the particle diameter.

In the example shown in FIG. 9, the calculation unit 17 virtually divides the particulate material 330 at intervals of 20° to set 18 fan-shaped sections 401, 402, 403, 404, .... Then, the calculation unit 17 calculates the radius in each of the fan-shaped sections. In one example, θ is 2° and p is 3. In a case where the radius is calculated in the fan-shaped section 401, the calculation unit 17 sets the sample points at intervals of 2° in the fan-shaped sections 401 and 402 and calculates a distance 411 of each sample point from the temporary centroid 333. Then, the calculation unit 17 obtains an average value of the top three distances 411 as the radius in the fan-shaped section 401. In a case where the radius is calculated in the fan-shaped section 402, the calculation unit 17 sets the sample points at intervals of 2° in the fan-shaped sections 402 and 403 and subsequently obtains the radius in the fan-shaped section 402 as in the case of the fan-shaped section 401. Then, the calculation unit 17 calculates the average value of the radii in 18 fan-shaped sections and obtains a value that is twice the average value as the particle diameter. In FIG. 9, the particle diameter is represented by a circle 421.

In one example, the calculation unit 17 calculates the coverage in the particulate material 330 as follows. That is, the calculation unit 17 sets a prescribed circle 422 which has a diameter that is α times the calculated particle diameter and which has the temporary centroid 333 as its center. A coefficient α is a value that is greater than 0 and is less than 1. For example, α is 0.6. The prescribed circle 422 corresponds to a central region of the particulate material 330. The calculation unit 17 calculates the total area of the coating region located in the prescribed circle 422, that is, the total area of one or more coating elements located in the central region. Then, the calculation unit 17 calculates the proportion of the total area to the area of the central region (prescribed circle 422) as the coverage. Each area can be identified by the number of pixels. Therefore, the calculation unit 17 may calculate, as the coverage, the proportion of the total number of pixels of the coating region located in the central region to the number of pixels of the central region.

In one example, the calculation unit 17 may calculate the area as the evaluation value or may calculate the evaluation value related to the shape, for each of the coating elements located in the central region (prescribed circle 422). The calculation unit 17 may calculate, as the evaluation value, a statistical value related to a plurality of coating elements located in the central region. In a case where the coating element is a particle, the calculation unit 17 may calculate the CV value in the central region as the evaluation value.

In one example, the calculation unit 17 calculates the height of the fine particle 332. First, the calculation unit 17 calculates the height of the fine particle 332 in each of the n fan-shaped sections. A method for calculating the height in the i-th fan-shaped section is as follows. That is, the calculation unit 17 sets the sample points on the contour of the particulate material 330 in the i-th fan-shaped section and the (i+1)-th fan-shaped section for each angle θ. Then, the calculation unit 17 calculates the distance of each sample point from the temporary centroid 333 and sorts a plurality of calculated distances in descending order. Then, the calculation unit 17 acquires the top p distances and obtains an average value Hₐᵥₑ of the p distances as the highest point. In addition, the calculation unit 17 acquires the bottom p distances and obtains an average value Lₐᵥₑ of the p distances as the lowest point. Then, the calculation unit 17 calculates a difference between the two average values Hₐᵥₑ and Lₐᵥₑ as the height of the fine particle 332 in the i-th fan-shaped section. In order to calculate the radius of the fine particle 332 in a certain fan-shaped section, the sample point in the next fan-shaped section is used, which makes it possible to suppress an error in the height that may occur due to the presence of the fine particle 332 or the presence of the distorted fine particle 332 on the boundary between the fan-shaped sections. The calculation unit 17 calculates an average value of the heights in the n fan-shaped sections and obtains the average value as the height of the fine particle 332 of the particulate material 330.

In the example shown in FIG. 9, the calculation unit 17 calculates the height of the fine particle 332 in each of the 18 fan-shaped sections. In one example, θ is 2° and p is 3. In a case where the height is calculated in the fan-shaped section 401, the calculation unit 17 sets the sample points at intervals of 2° in the fan-shaped sections 401 and 402 and calculates the distance 411 of each sample point from the temporary centroid 333. Then, the calculation unit 17 obtains a difference between the average value Hₐᵥₑ of the top three distances 411 and the average value Lₐᵥₑ of the bottom three distances 411 as the height of the fine particle 332 in the fan-shaped section 401. In a case where the radius is calculated in the fan-shaped section 402, the calculation unit 17 sets the sample points at intervals of 2° in the fan-shaped sections 402 and 403 and subsequently obtains the height of the fine particle 332 in the fan-shaped section 402 as in the case of the fan-shaped section 401. Then, the calculation unit 17 calculates the average value of the heights in the 18 fan-shaped sections as the height of the fine particle 332 of the particulate material 330.

The calculation unit 17 may exclude the fan-shaped section that corresponds to the contour corresponding to the overlapping portion, calculate the height of the fine particle 332 in each of the remaining fan-shaped sections, and calculate the average value of a plurality of calculated heights as the height of the fine particle 332 of the particulate material 330.

Returning to FIG. 3, in step S25, the calculation unit 17 outputs the evaluation value. The calculation unit 17 may display the evaluation value on a monitor, may store the evaluation value in a predetermined storage device such as a database, or may transmit the evaluation value to other computers.

The calculation unit 17 may display the result of at least one of the instance segmentation and the semantic segmentation. For example, the calculation unit 17 may display the target image 52 on which the instance mask (temporary instance mask), the first semantic mask, the second semantic mask, or the integrated semantic mask is superimposed. Alternatively, the calculation unit 17 may display the target image 52 on which the final instance mask is superimposed based on the instance information. The user may check the result of the image segmentation, the basis of the evaluation value, and the like through these images.

The evaluation system 10 may execute the processing flow S2 a plurality of times or repeatedly. For example, every time the user selects the target image 52, the evaluation system 10 executes the processing flow S2 in response to the selection. The evaluation system 10 may calculate a statistical value of a plurality of evaluation values corresponding to a plurality of objects as a further evaluation value.

### [Modification Examples]

The technology according to the present disclosure has been described in detail above based on various examples. However, the present disclosure is not limited to the above examples. The technology according to the present disclosure can be modified in various ways without departing from the gist of the present disclosure.

The original image may be provided from a device other than the database. For example, the original image may be provided directly from an imaging device such as an SEM or a camera.

In the above examples, the identification unit 15 combines the first semantic mask and the second semantic mask to generate the integrated semantic mask. However, the semantic masks indicating the contour and the coating region of the object set may be set by other methods. For example, the image analysis system may input the target image to a semantic segmentation model that performs semantic segmentation on both the contour and the coating region of the object set to set the semantic masks.

A processing procedure of a method executed by at least one processor is not limited to the example in the above-described embodiment. For example, some of the described-above steps may be omitted, or the described-above steps may be executed in other orders. In addition, any two or more of the above-described steps may be combined, or some of the steps may be corrected or deleted. Alternatively, other steps may be performed in addition to each of the above-described steps. For example, at least one of the preprocessing and the post-processing on the target image may be omitted. The expansion of the temporary instance mask can also be omitted.

In the comparison between the magnitudes of two numerical values in the present disclosure, either of two criteria of "equal to or greater than" and "greater than" may be used, or either of two criteria of "equal to or less than" and "less than" may be used.

In the present disclosure, an expression "At least one processor executes a first process, executes a second process, ..., and executes an n-th process." or an expression corresponding thereto indicates a concept including a case where a subject (that is, a processor) that executes n processes from the first process to the n-th process is changed in the middle. That is, this expression indicates a concept including both a case where all of the n processes are executed by the same processor and a case where the processor is changed according to an any policy in the n processes.

### [Appendix]

As will be appreciated from the various examples above, the present disclosure includes the following aspects.

### (Appendix 1)

An image analysis system comprising at least one processor, wherein the at least one processor is configured to:
acquire a target image showing one or more objects each of which has a base material and a coating region on the base material;
input the target image to an instance segmentation model executing instance segmentation to set at least one instance mask distinguishing each of at least one of the one or more objects from each other;
input the target image to a semantic segmentation model executing semantic segmentation to set a semantic mask indicating a contour and a coating region of an object set consisting of the at least one object; and
identify, for each of the at least one object, the contour and the coating region of the object based on the at least one instance mask and the semantic mask.

### (Appendix 2)

The image analysis system according to Appendix 1, wherein the at least one processor is configured to replace, for each of the at least one instance mask, the instance mask with a corresponding portion of the semantic mask to identify the contour and the coating region of the object corresponding to the instance mask.

### (Appendix 3)

The image analysis system according to Appendix 2,
wherein the one or more objects include a first object and a second object adjacent to each other,
wherein the at least one instance mask includes a first instance mask corresponding to the first object and a second instance mask corresponding to the second object, and
wherein the at least one processor is configured to:
   divide an overlapping portion between the first instance mask and the second instance mask into a first portion corresponding to the first instance mask and a second portion corresponding to the second instance mask;
   replace a non-overlapping portion and the first portion of the first instance mask with the corresponding portion of the semantic mask to identify the contour and the coating region of the first object; and
   replace a non-overlapping portion and the second portion of the second instance mask with the corresponding portion of the semantic mask to identify the contour and the coating region of the second object.

### (Appendix 4)

The image analysis system according to Appendix 3, wherein the at least one processor is configured to assign, for each pixel of the overlapping portion, the pixel to one of the first instance mask and the second instance mask based on a distance from the pixel to a first centroid of the first instance mask and a distance from the pixel to a second centroid of the second instance mask, thereby dividing the overlapping portion into the first portion and the second portion.

### (Appendix 5)

The image analysis system according to any one of Appendices 1 to 4, wherein the at least one processor is configured to:
expand each of the at least one instance mask; and
identify the contour and the coating region for each of the at least one object based on the expanded at least one instance mask and the semantic mask.

### (Appendix 6)

The image analysis system according to any one of Appendices 1 to 5, wherein the at least one processor is configured to:
input the target image to a first semantic segmentation model executing semantic segmentation on the contour to set a first semantic mask indicating the contour of the object set;
input the target image to a second semantic segmentation model executing semantic segmentation on the coating region to set a second semantic mask indicating the coating region; and
combine the first semantic mask and the second semantic mask to set the semantic mask indicating the contour and the coating region of the object set.

### (Appendix 7)

The image analysis system according to any one of Appendices 1 to 6, wherein the object is a particulate material.

### (Appendix 8)

The image analysis system according to Appendix 7,
wherein the base material is a core particle, and
the coating region is a set of a plurality of fine particles.

### (Appendix 9)

An image analysis method executed by an image analysis system including at least one processor, the image analysis method comprising:
acquiring a target image showing one or more objects each of which has a base material and a coating region on the base material;
inputting the target image to an instance segmentation model executing instance segmentation to set at least one instance mask distinguishing each of at least one of the one or more objects from each other;
inputting the target image to a semantic segmentation model executing semantic segmentation to set a semantic mask indicating a contour and a coating region of an object set consisting of the at least one object; and
identifying, for each of the at least one object, the contour and the coating region of the object based on the at least one instance mask and the semantic mask.

### (Appendix 10)

An image analysis program causing a computer to execute:
acquiring a target image showing one or more objects each of which has a base material and a coating region on the base material;
inputting the target image to an instance segmentation model executing instance segmentation to set at least one instance mask distinguishing each of at least one of the one or more objects from each other;
inputting the target image to a semantic segmentation model executing semantic segmentation to set a semantic mask indicating a contour and a coating region of an object set consisting of the at least one object; and
identifying, for each of the at least one object, the contour and the coating region of the object based on the at least one instance mask and the semantic mask.

According to Appendices 1, 9, and 10, two types of image segmentation of instance segmentation and semantic segmentation are executed to set two types of masks for each object. Then, the contour and the coating region are identified for each object based on the two types of masks. The two types of image segmentation are applied to one target image, which makes it possible to accurately identify the object in the image, using advantages of both the instance segmentation and the semantic segmentation, which are described above. Since the object is accurately identified, it is possible to more accurately evaluate the object.

According to Appendix 2, the instance masks that distinguish the individual objects from each other are used as a reference, and the instance masks are replaced by the semantic mask with high shape accuracy. By using the two types of masks, it is possible to accurately identify the contour and the coating region of the object.

According to Appendix 3, in a case where adjacent instance masks overlap each other, each of the instance masks is clearly divided. Therefore, it is possible to accurately identify each of two adjacent objects.

According to Appendix 4, by considering the distance from the centroid of each instance, it is possible to assign each pixel of the overlapping portion to the most probable instance mask. Therefore, even in a case where adjacent instance masks overlap each other, it is possible to accurately identify each object in the image.

According to Appendix 5, by expanding the instance mask having a lower shape accuracy than the semantic mask, the entire object is more reliably covered by the instance mask. Since the expanded instance mask is replaced by the semantic mask, it is possible to accurately identify the contour and the coating region of the object.

According to Appendix 6, since the semantic segmentation is performed individually on each of the contour and the coating region of the object, it is possible to more accurately set the shape of the semantic mask indicating the contour and the coating region. As a result, it is possible to accurately identify the object in the image.

According to Appendix 7, it is possible to accurately identify the particulate material in the image. As a result, it is possible to more accurately evaluate the particulate material.

According to Appendix 8, it is possible to accurately identify a set of a plurality of fine particles using the instance segmentation and the semantic segmentation. As a result, it is possible to more accurately evaluate the particulate material including the fine particle as a component of the coating region.

### Reference Signs List

10: Evaluation system; 11: Preprocessing unit; 12: Instance segmentation unit; 13: First semantic segmentation unit; 14: Second semantic segmentation unit; 15: Identification unit; 16: Post-processing unit; 17: Calculation unit; 20: Trained model; 21: Instance segmentation model; 22: First semantic segmentation model; 23: Second semantic segmentation model; 30: Learning device; 41: Training image database; 42: Original image database; 51: Original image; 52: Target image; 211, 212: Instance mask (temporary instance mask); 221: First semantic mask; 222: Second semantic mask; 310, 320: Object; 311, 321: Temporary centroid; 330: Particulate material; 331: Base material; 332: Fine particle; 333: Temporary centroid.

## Claims

1. An image analysis system (10) comprising at least one processor (101),
wherein the at least one processor (101) is configured to:
acquire a target image (52) showing one or more objects each of which has a base material and a coating region on the base material;
input the target image (52) to an instance segmentation model (21) executing instance segmentation to set at least one instance mask distinguishing each of at least one of the one or more objects from each other;
input the target image (52) to a semantic segmentation model (22, 23) executing semantic segmentation to set a semantic mask indicating a contour and a coating region of an object set consisting of the at least one object;
identify, for each of the at least one object, the contour and the coating region of the object based on the at least one instance mask and the semantic mask; and
replace, for each of the at least one instance mask, the instance mask with a corresponding portion of the semantic mask to identify the contour and the coating region of the object corresponding to the instance mask,
wherein the one or more objects include a first object and a second object adjacent to each other,
wherein the at least one instance mask includes a first instance mask corresponding to the first object and a second instance mask corresponding to the second object, and
wherein the at least one processor (101) is configured to:
divide an overlapping portion between the first instance mask and the second instance mask into a first portion corresponding to the first instance mask and a second portion corresponding to the second instance mask;
replace a non-overlapping portion and the first portion of the first instance mask with the corresponding portion of the semantic mask to identify the contour and the coating region of the first object; and
replace a non-overlapping portion and the second portion of the second instance mask with the corresponding portion of the semantic mask to identify the contour and the coating region of the second object.

2. The image analysis system (10) according to claim 1, wherein the at least one processor (101) is configured to assign, for each pixel of the overlapping portion, the pixel to one of the first instance mask and the second instance mask based on a distance from the pixel to a first centroid of the first instance mask and a distance from the pixel to a second centroid of the second instance mask, thereby dividing the overlapping portion into the first portion and the second portion.

3. The image analysis system (10) according to claim 1 or 2, wherein the at least one processor (101) is configured to:
expand each of the at least one instance mask; and
identify the contour and the coating region for each of the at least one object based on the expanded at least one instance mask and the semantic mask.

4. The image analysis system (10) according to any one of claims 1 to 3, wherein the at least one processor (101) is configured to:
input the target image (52) to a first semantic segmentation model (22) executing semantic segmentation on the contour to set a first semantic mask indicating the contour of the object set;
input the target image (52) to a second semantic segmentation model (23) executing semantic segmentation on the coating region to set a second semantic mask indicating the coating region; and
combine the first semantic mask and the second semantic mask to set the semantic mask indicating the contour and the coating region of the object set.

5. The image analysis system (10) according to any one of claims 1 to 4, wherein the object is a particulate material.

6. The image analysis system (10) according to claim 5,
wherein the base material is a core particle, and
wherein the coating region is a set of a plurality of fine particles.

7. An image analysis method executed by an image analysis system (10) including at least one processor (101), the image analysis method comprising:
acquiring a target image (52) showing one or more objects each of which has a base material and a coating region on the base material;
inputting the target image (52) to an instance segmentation model (21) executing instance segmentation to set at least one instance mask distinguishing each of at least one of the one or more objects from each other;
inputting the target image (52) to a semantic segmentation model (22, 23) executing semantic segmentation to set a semantic mask indicating a contour and a coating region of an object set consisting of the at least one object;
identifying, for each of the at least one object, the contour and the coating region of the object based on the at least one instance mask and the semantic mask; and
replacing, for each of the at least one instance mask, the instance mask with a corresponding portion of the semantic mask to identify the contour and the coating region of the object corresponding to the instance mask,
wherein the one or more objects include a first object and a second object adjacent to each other,
wherein the at least one instance mask includes a first instance mask corresponding to the first object and a second instance mask corresponding to the second object, and
wherein the at least one processor (101) is configured to:
divide an overlapping portion between the first instance mask and the second instance mask into a first portion corresponding to the first instance mask and a second portion corresponding to the second instance mask;
replace a non-overlapping portion and the first portion of the first instance mask with the corresponding portion of the semantic mask to identify the contour and the coating region of the first object; and
replace a non-overlapping portion and the second portion of the second instance mask with the corresponding portion of the semantic mask to identify the contour and the coating region of the second object.

8. An image analysis program comprising instructions which, when the program is executed by the computer, cause the computer to carry out:
acquiring a target image (52) showing one or more objects each of which has a base material and a coating region on the base material;
inputting the target image (52) to an instance segmentation model (21) executing instance segmentation to set at least one instance mask distinguishing each of at least one of the one or more objects from each other;
inputting the target image (52) to a semantic segmentation model (22, 23) executing semantic segmentation to set a semantic mask indicating a contour and a coating region of an object set consisting of the at least one object;
identifying, for each of the at least one object, the contour and the coating region of the object based on the at least one instance mask and the semantic mask;
replacing, for each of the at least one instance mask, the instance mask with a corresponding portion of the semantic mask to identify the contour and the coating region of the object corresponding to the instance mask;
wherein the one or more objects include a first object and a second object adjacent to each other,
wherein the at least one instance mask includes a first instance mask corresponding to the first object and a second instance mask corresponding to the second object;
dividing an overlapping portion between the first instance mask and the second instance mask into a first portion corresponding to the first instance mask and a second portion corresponding to the second instance mask;
replacing a non-overlapping portion and the first portion of the first instance mask with the corresponding portion of the semantic mask to identify the contour and the coating region of the first object; and
replacing a non-overlapping portion and the second portion of the second instance mask with the corresponding portion of the semantic mask to identify the contour and the coating region of the second object.

## Patentansprüche

1. Bildanalysesystem (10), umfassend mindestens einen Prozessor (101),
wobei der mindestens eine Prozessor (101) konfiguriert ist:
ein Zielbild (52) zu erfassen, das ein oder mehrere Objekte zeigt, von denen jedes ein Basismaterial und einen Beschichtungsbereich auf dem Basismaterial aufweist;
das Zielbild (52) in ein Instanzsegmentierungsmodell (21) einzugeben, das Instanzsegmentierung ausführt, um mindestens eine Instanzmaske zu setzen, die jedes von mindestens einem der ein oder mehreren Objekte voneinander unterscheidet;
das Zielbild (52) in ein semantisches Segmentierungsmodell (22, 23) einzugeben, das semantische Segmentierung ausführt, um eine semantische Maske zu setzen, die eine Kontur und einen Beschichtungsbereich einer Objektmenge angibt, die aus dem mindestens einen Objekt besteht;
für jedes des mindestens einen Objekts die Kontur und den Beschichtungsbereich des Objekts basierend auf der mindestens einen Instanzmaske und der semantischen Maske zu identifizieren; und
für jede der mindestens einen Instanzmaske die Instanzmaske durch einen entsprechenden Abschnitt der semantischen Maske zu ersetzen, um die Kontur und den Beschichtungsbereich des der Instanzmaske entsprechenden Objekts zu identifizieren,
wobei die ein oder mehreren Objekte ein erstes Objekt und ein zweites, benachbartes Objekt umfassen,
wobei die mindestens eine Instanzmaske eine dem ersten Objekt entsprechende erste Instanzmaske und eine dem zweiten Objekt entsprechende zweite Instanzmaske umfasst, und
wobei der mindestens eine Prozessor (101) konfiguriert ist:
einen überlappenden Abschnitt zwischen der ersten Instanzmaske und der zweiten Instanzmaske in einen der ersten Instanzmaske entsprechenden ersten Abschnitt und einen der zweiten Instanzmaske entsprechenden zweiten Abschnitt aufzuteilen;
einen nicht überlappenden Abschnitt und den ersten Abschnitt der ersten Instanzmaske durch den entsprechenden Abschnitt der semantischen Maske zu ersetzen, um die Kontur und den Beschichtungsbereich des ersten Objekts zu identifizieren; und
einen nicht überlappenden Abschnitt und den zweiten Abschnitt der zweiten Instanzmaske durch den entsprechenden Abschnitt der semantischen Maske zu ersetzen, um die Kontur und den Beschichtungsbereich des zweiten Objekts zu identifizieren.

2. Bildanalysesystem (10) nach Anspruch 1, wobei der mindestens eine Prozessor (101) konfiguriert ist, für jedes Pixel des überlappenden Abschnitts das Pixel einer der ersten Instanzmaske und der zweiten Instanzmaske zuzuordnen, basierend auf einem Abstand von dem Pixel zu einem ersten Schwerpunkt der ersten Instanzmaske und einem Abstand von dem Pixel zu einem zweiten Schwerpunkt der zweiten Instanzmaske, wodurch der überlappende Abschnitt in den ersten Abschnitt und den zweiten Abschnitt aufgeteilt wird.

3. Bildanalysesystem (10) nach Anspruch 1 oder 2, wobei der mindestens eine Prozessor (101) konfiguriert ist:
jede der mindestens einen Instanzmaske zu erweitern; und
die Kontur und den Beschichtungsbereich für jedes der mindestens einen Objekte basierend auf der erweiterten mindestens einen Instanzmaske und der semantischen Maske zu identifizieren.

4. Bildanalysesystem (10) nach einem der Ansprüche 1 bis 3, wobei der mindestens eine Prozessor (101) konfiguriert ist:
das Zielbild (52) in ein erstes semantisches Segmentierungsmodell (22) einzugeben, das semantische Segmentierung auf der Kontur ausführt, um eine erste semantische Maske zu setzen, die die Kontur der Objektmenge angibt;
das Zielbild (52) in ein zweites semantisches Segmentierungsmodell (23) einzugeben, das semantische Segmentierung auf dem Beschichtungsbereich ausführt, um eine zweite semantische Maske zu setzen, die den Beschichtungsbereich angibt; und
die erste semantische Maske und die zweite semantische Maske zu kombinieren, um die semantische Maske zu setzen, die die Kontur und den Beschichtungsbereich der Objektmenge angibt.

5. Bildanalysesystem (10) nach einem der Ansprüche 1 bis 4, wobei das Objekt ein Partikelmaterial ist.

6. Bildanalysesystem (10) nach Anspruch 5, wobei das Basismaterial ein Kernpartikel ist, und wobei der Beschichtungsbereich eine Menge einer Vielzahl von Feinpartikeln ist.

7. Bildanalyseverfahren, ausgeführt durch ein Bildanalysesystem (10), das mindestens einen Prozessor (101) umfasst, wobei das Bildanalyseverfahren umfasst:
Erfassen eines Zielbilds (52), das ein oder mehrere Objekte zeigt, von denen jedes ein Basismaterial und einen Beschichtungsbereich auf dem Basismaterial aufweist;
Eingeben des Zielbilds (52) in ein Instanzsegmentierungsmodell (21), das Instanzsegmentierung ausführt, um mindestens eine Instanzmaske zu setzen, die jedes von mindestens einem der ein oder mehreren Objekte voneinander unterscheidet;
Eingeben des Zielbilds (52) in ein semantisches Segmentierungsmodell (22, 23), das semantische Segmentierung ausführt, um eine semantische Maske zu setzen, die eine Kontur und einen Beschichtungsbereich einer Objektmenge angibt, die aus dem mindestens einen Objekt besteht;
Identifizieren, für jedes des mindestens einen Objekts, der Kontur und des Beschichtungsbereichs des Objekts basierend auf der mindestens einen Instanzmaske und der semantischen Maske; und
Ersetzen, für jede der mindestens einen Instanzmaske, der Instanzmaske durch einen entsprechenden Abschnitt der semantischen Maske, um die Kontur und den Beschichtungsbereich des der Instanzmaske entsprechenden Objekts zu identifizieren,
wobei die ein oder mehreren Objekte ein erstes Objekt und ein zweites, benachbartes Objekt umfassen,
wobei die mindestens eine Instanzmaske eine dem ersten Objekt entsprechende erste Instanzmaske und eine dem zweiten Objekt entsprechende zweite Instanzmaske umfasst, und
wobei der mindestens eine Prozessor (101) konfiguriert ist:
einen überlappenden Abschnitt zwischen der ersten Instanzmaske und der zweiten Instanzmaske in einen der ersten Instanzmaske entsprechenden ersten Abschnitt und einen der zweiten Instanzmaske entsprechenden zweiten Abschnitt aufzuteilen;
einen nicht überlappenden Abschnitt und den ersten Abschnitt der ersten Instanzmaske durch den entsprechenden Abschnitt der semantischen Maske zu ersetzen, um die Kontur und den Beschichtungsbereich des ersten Objekts zu identifizieren; und
einen nicht überlappenden Abschnitt und den zweiten Abschnitt der zweiten Instanzmaske durch den entsprechenden Abschnitt der semantischen Maske zu ersetzen, um die Kontur und den Beschichtungsbereich des zweiten Objekts zu identifizieren.

8. Bildanalyseprogramm, umfassend Anweisungen, die, wenn das Programm durch den Computer ausgeführt wird, den Computer veranlassen, auszuführen:
Erfassen eines Zielbilds (52), das ein oder mehrere Objekte zeigt, von denen jedes ein Basismaterial und einen Beschichtungsbereich auf dem Basismaterial aufweist;
Eingeben des Zielbilds (52) in ein Instanzsegmentierungsmodell (21), das Instanzsegmentierung ausführt, um mindestens eine Instanzmaske zu setzen, die jedes von mindestens einem der ein oder mehreren Objekte voneinander unterscheidet;
Eingeben des Zielbilds (52) in ein semantisches Segmentierungsmodell (22, 23), das semantische Segmentierung ausführt, um eine semantische Maske zu setzen, die eine Kontur und einen Beschichtungsbereich einer Objektmenge angibt, die aus dem mindestens einen Objekt besteht;
Identifizieren, für jedes des mindestens einen Objekts, der Kontur und des Beschichtungsbereichs des Objekts basierend auf der mindestens einen Instanzmaske und der semantischen Maske;
Ersetzen, für jede der mindestens einen Instanzmaske, der Instanzmaske durch einen entsprechenden Abschnitt der semantischen Maske, um die Kontur und den Beschichtungsbereich des der Instanzmaske entsprechenden Objekts zu identifizieren;
wobei die ein oder mehreren Objekte ein erstes Objekt und ein zweites, benachbartes Objekt umfassen,
wobei die mindestens eine Instanzmaske eine dem ersten Objekt entsprechende erste Instanzmaske und eine dem zweiten Objekt entsprechende zweite Instanzmaske umfasst;
Aufteilen eines überlappenden Abschnitts zwischen der ersten Instanzmaske und der zweiten Instanzmaske in einen der ersten Instanzmaske entsprechenden ersten Abschnitt und einen der zweiten Instanzmaske entsprechenden zweiten Abschnitt;
Ersetzen eines nicht überlappenden Abschnitts und des ersten Abschnitts der ersten Instanzmaske durch den entsprechenden Abschnitt der semantischen Maske, um die Kontur und den Beschichtungsbereich des ersten Objekts zu identifizieren; und
Ersetzen eines nicht überlappenden Abschnitts und des zweiten Abschnitts der zweiten Instanzmaske durch den entsprechenden Abschnitt der semantischen Maske, um die Kontur und den Beschichtungsbereich des zweiten Objekts zu identifizieren.

## Revendications

1. Système d'analyse d'images (10) comprenant au moins un processeur (101), dans lequel ledit au moins un processeur (101) est configuré pour :
acquérir une image cible (52) représentant un ou plusieurs objets, chacun d'entre eux comportant un matériau de base et une zone de revêtement sur ledit matériau de base ;
entrer l'image cible (52) dans un modèle de segmentation d'instances (21) exécutant une segmentation d'instances afin de définir au moins un masque d'instance distinguant chacun d'au moins un de ces un ou plusieurs objets les uns des autres ;
entrer l'image cible (52) dans un modèle de segmentation sémantique (22, 23) exécutant une segmentation sémantique afin de définir un masque sémantique indiquant un contour et une zone de revêtement d'un ensemble d'objets constitué dudit au moins un objet ;
identifier, pour chacun des au moins un objet, le contour et la zone de revêtement de l'objet sur la base dudit au moins un masque d'instance et du masque sémantique ; et
remplacer, pour chacun desdits au moins un masque d'instance, le masque d'instance par une partie correspondante du masque sémantique afin d'identifier le contour et la zone de revêtement de l'objet correspondant au masque d'instance,
dans lequel le ou les objets comprennent un premier objet et un deuxième objet adjacents l'un à l'autre,
dans lequel ledit au moins un masque d'instance comprend un premier masque d'instance correspondant au premier objet et un deuxième masque d'instance correspondant au deuxième objet, et
dans lequel le au moins un processeur (101) est configuré pour :
diviser une partie de chevauchement entre le premier masque d'instance et le deuxième masque d'instance en une première partie correspondant au premier masque d'instance et une deuxième partie correspondant au deuxième masque d'instance ;
remplacer une partie non chevauchante et la première partie du premier masque d'instance par la partie correspondante du masque sémantique afin d'identifier le contour et la zone de revêtement du premier objet ; et
remplacer une partie non chevauchante et la deuxième partie du deuxième masque d'instance par la partie correspondante du masque sémantique afin d'identifier le contour et la zone de revêtement du deuxième objet.

2. Système d'analyse d'images (10) selon la revendication 1, dans lequel ledit au moins un processeur (101) est configuré pour attribuer, pour chaque pixel de la partie chevauchante, ledit pixel soit au premier masque d'instance en fonction d'une distance entre le pixel et un premier centre de gravité du premier masque d'instance, soit au deuxième masque d'instance, en fonction d'une distance entre le pixel et un deuxième centre de gravité du deuxième masque d'instance, divisant ainsi la partie chevauchante en une première partie et une deuxième partie.

3. Système d'analyse d'images (10) selon la revendication 1 ou 2, dans lequel ledit au moins un processeur (101) est configuré pour :
développer chacun des au moins un masque d'instance ; et
identifier le contour et la zone de revêtement pour chacun des au moins un objet sur la base du ou des masques d'instance agrandis et du masque sémantique.

4. Système d'analyse d'images (10) selon l'une quelconque des revendications 1 à 3, dans lequel ledit au moins un processeur (101) est configuré pour :
entrer l'image cible (52) dans un premier modèle de segmentation sémantique (22) exécutant une segmentation sémantique sur le contour afin de définir un premier masque sémantique indiquant le contour de l'ensemble d'objets ;
introduire l'image cible (52) dans un deuxième modèle de segmentation sémantique (23) exécutant une segmentation sémantique sur la région de revêtement afin de définir un deuxième masque sémantique indiquant la région de revêtement ; et
combiner le premier masque sémantique et le deuxième masque sémantique afin de définir le masque sémantique indiquant le contour et la zone de revêtement de l'ensemble d'objets.

5. Système d'analyse d'images (10) selon l'une quelconque des revendications 1 à 4, dans lequel l'objet est un matériau particulaire.

6. Système d'analyse d'images (10) selon la revendication 5,
dans lequel le matériau de base est une particule centrale, et
dans lequel la zone de revêtement est un ensemble d'une pluralité de particules fines.

7. Procédé d'analyse d'images exécuté par un système d'analyse d'images (10) comprenant au moins un processeur (101), le procédé d'analyse d'images comprenant :
l'acquisition d'une image cible (52) représentant un ou plusieurs objets, chacun d'entre eux comportant un matériau de base et une zone de revêtement sur ledit matériau de base ;
l'entrée de l'image cible (52) dans un modèle de segmentation d'instances (21) exécutant une segmentation d'instances afin de définir au moins un masque d'instance distinguant chacun d'au moins un parmi le ou les objets les uns des autres ;
l'entrée de l'image cible (52) dans un modèle de segmentation sémantique (22, 23) exécutant une segmentation sémantique afin de définir un masque sémantique indiquant un contour et une zone de revêtement d'un ensemble d'objets constitué dudit au moins un objet ;
l'identification, pour chacun des au moins un objet, du contour et de la zone de revêtement de l'objet sur la base dudit au moins un masque d'instance et du masque sémantique ; et
le remplacement, pour chacun des au moins un masque d'instance, du masque d'instance par une partie correspondante du masque sémantique afin d'identifier le contour et la zone de revêtement de l'objet correspondant au masque d'instance,
dans lequel le ou les objets comprennent un premier objet et un deuxième objet adjacents l'un à l'autre,
dans lequel ledit au moins un masque d'instance comprend un premier masque d'instance correspondant au premier objet et un deuxième masque d'instance correspondant au deuxième objet, et
dans lequel ledit au moins un processeurs (101) est configuré pour :
diviser une partie de chevauchement entre le premier masque d'instance et le deuxième masque d'instance en une première partie correspondant au premier masque d'instance et une deuxième partie correspondant au deuxième masque d'instance ;
remplacer une partie non chevauchante et la première partie du premier masque d'instance par la partie correspondante du masque sémantique afin d'identifier le contour et la zone de revêtement du premier objet ; et
remplacer une partie non chevauchante et la deuxième partie du deuxième masque d'instance par la partie correspondante du masque sémantique afin d'identifier le contour et la zone de revêtement du deuxième objet.

8. Programme d'analyse d'images comprenant des instructions qui, lorsque le programme est exécuté par l'ordinateur, amènent l'ordinateur à effectuer :
acquérir une image cible (52) représentant un ou plusieurs objets, chacun d'entre eux comportant un matériau de base et une zone de revêtement sur ledit matériau de base ;
entrer l'image cible (52) dans un modèle de segmentation d'instances (21) exécutant une segmentation d'instances afin de définir au moins un masque d'instance distinguant chacun d'au moins un desdits un ou plusieurs objets les uns des autres ;
entrer l'image cible (52) dans un modèle de segmentation sémantique (22, 23) exécutant une segmentation sémantique afin de définir un masque sémantique indiquant un contour et une zone de revêtement d'un ensemble d'objets constitué dudit au moins un objet ;
identifier, pour chacun des au moins un objet, le contour et la zone de revêtement de l'objet sur la base dudit au moins un masque d'instance et du masque sémantique ;
remplacer, pour chacun des au moins un masque d'instance, le masque d'instance avec une partie correspondante du masque sémantique pour identifier le contour et la zone de revêtement de l'objet correspondant au masque d'instance ;
dans lequel le ou les objets comprennent un premier objet et un deuxième objet adjacents l'un à l'autre,
dans lequel le ou les masques d'instance comprennent un premier masque d'instance correspondant au premier objet et un deuxième masque d'instance correspondant au deuxième objet ;
diviser une partie de chevauchement entre le premier masque d'instance et le deuxième masque d'instance en une première partie correspondant au premier masque d'instance et une deuxième partie correspondant au deuxième masque d'instance ;
remplacer une partie ne se chevauchant pas et la première partie du premier masque d'instance par la partie correspondante du masque sémantique afin d'identifier le contour et la zone de revêtement du premier objet ; et
remplacer une partie non chevauchante et la deuxième partie du deuxième masque d'instance par la partie correspondante du masque sémantique afin d'identifier le contour et la zone de revêtement du deuxième objet.
